# EUROPEAN PATENT APPLICATION

(11) **EP 0 537 861 A1**
(43) Date of publication of application: **21.04.1993**
(21) Application number: 92203178.6
(22) Date of filing: 15.10.1992
(51) Int. Cl.: B60S 9/02, B60S 9/14

(54) **Device for stabilising the supporting leg for a vehicle**

(30) Priority: 17.10.1991 NL 9101740
(71) Applicant: WEWELER N.V., NL-7332 AP Apeldoorn (NL)
(72) Inventor: Aalderink, Derk Geert, NL-7245 NV Laren (NL)
(74) Representative: de Bruijn, Leendert C.

(57) **Abstract**

A supporting device for a vehicle comprises at least one supporting leg (1) which is tiltable relative to the vehicle chassis (7) between a working position in which it supports the chassis and a non-working position. Means (5,6) are also provided for stabilising the supporting leg to prevent it from turning out of the working position in which the supporting leg is supporting the chassis, which means prevent the supporting leg from turning when a couple which is smaller than a predetermined couple is exerted on it, and allow turning of the supporting leg when there is a couple which is greater than said predetermined couple, in such a way that overloading of the supporting leg and chassis is avoided.

## Description

The invention relates to a supporting device for a vehicle, comprising at least one supporting leg which is tiltable relative to the vehicle chassis between a working position in which it supports the chassis and a non-working position. Such a supporting device is described in Dutch Application 9101255, which is not a prior publication. It is intended for fixing the height level of a loading floor of a vehicle. This can be a vehicle which can place the loading floor at the desired height by its own gas bellows system, but the use of such supporting devices is not restricted to vehicles of that type.

It is known to hold the loading floor of a vehicle at the same level as a platform by means of the abovementioned supporting leg, in such a way that the vehicle is easily loaded or unloaded. As soon as the loading or unloading of the vehicle has ended, the supporting leg can be retracted. In practice, the problem can occur here that one forgets to retract the supporting leg before driving off. The result of this is that the supporting leg and its suspension are damaged and can become blocked, which can lead to expensive repairs and delays.

The object of the invention is therefore to provide a supporting device of the type described above in which the occurrence of any damage through driving off without retracting the supporting leg is avoided. This is achieved in that means are provided for stabilising the supporting leg to prevent it from turning out of the working position in which the supporting leg is supporting the chassis, which means prevent the supporting leg from turning when a couple which is smaller than a predetermined couple is exerted on it, and allow turning of the supporting leg when there is a couple which is greater than said predetermined couple, in such a way that overloading of the supporting leg and chassis is avoided.

On the one hand, the supporting device provides the desired stable support of the vehicle, even if the vehicle is not secured against rolling away during loading or unloading, for example if the parking brake is not engaged. This support is important in order to ensure that also when a forklift truck is moving or braking on the loading floor the vehicle does not start to roll. However, as soon as one tries to move off with the supporting leg not yet retracted the latter can turn away under the influence of the horizontal load to which it is exposed in that case.

There are various possibilities for obtaining the predetermined couple above which the supporting leg can turn away. There could be a friction coupling between supporting leg and chassis. However, the device is preferably designed in such a way that the chassis and the supporting leg have supporting surfaces which interact with each other when the supporting leg is in the working position, which supporting surfaces are formed and positioned in such a way that the supporting leg can turn out of the working position only if there is a simultaneous increase in the distance between the mutual supporting surfaces of the supporting leg and those of the chassis, which increase in distance results in the chassis being raised relative to the ground on which the supporting leg is resting. A stabilising effect can thus be ensured by means of the weight of the vehicle itself with its load, the size of the predetermined couple depending partly on the load on the supporting leg.

According to a simple embodiment, the interacting supporting surfaces of the supporting leg and the chassis can be essentially flat and run horizontally. As an alternative, the interacting supporting surfaces of the supporting leg and the chassis can each comprise two supporting surface halves lying at a distance from each other in the lengthwise direction of the chassis.

In the case of these embodiments, a substantial horizontal load component, resulting from the initial driving off of the vehicle, must also be absorbed. In connection with this, according to a preferred embodiment provision is made for the supporting surfaces of supporting leg and chassis to be formed by at least one ball-shaped joint part and a complementary socket-shaped joint part, and one of the joint parts comprises a projection which fits essentially in a close-fitting manner into a correspondingly shaped recess in the other joint part when supporting surfaces of supporting leg and chassis are interacting, which projection and recess have flanks and walls respectively which are formed in such a way that when the supporting leg turns relative to the chassis the flanks of the projection can slide over the walls of the recess, in which case the projection moves out of the recess.

In order to ensure a sufficiently sturdy construction, even if the supporting leg is already partially tilted while the weight of the vehicle is still resting on it, provision is made for each socket-shaped joint part to comprise two projections lying essentially in the same plane, in such a way that when the supporting leg is turned at least two projections remain engaged with the ball-shaped joint part, with the result that two supporting points are retained for transmitting the loads exerted in the vertical direction on the supporting leg to the chassis.

Further tilting of the supporting leg can take place smoothly if the socket-shaped joint part has an essentially cylindrical cavity relative to which the two projections are placed symmetrically and project inwards, and the ball-shaped joint part has an essentially cylindrical periphery provided with recesses corresponding to the projections.

The horizontal load force exerted on the supporting leg on driving away can be absorbed in a suitable manner. For this purpose, the supporting device is designed in such a way that the essentially cylindrical part of the cavity of the socket-shaped joint part extends over at least an arc of 180 degrees, and the essentially cylindrical peripheral part of the ball-shaped joint part extends over an arc greater than 180 degrees, in such a way that both in the working and in the tilted position of the supporting leg at least a third supporting point is retained for transmitting the load exerted in the horizontal direction on the supporting leg through the two joint parts to the chassis.

The invention will be explained in greater detail below with reference to a number of examplary embodiments.

Figure 1 shows a side view of a first embodiment of the supporting leg in a partially tilted state.

Figure 2 shows a side view corresponding to Figure 1, in which the supporting leg is in the working position.

Figure 3 shows a rear view of a supporting device with two supporting legs on a common shaft.

Figure 4 shows a second embodiment in side view.

Figure 5 shows a third embodiment in side view.

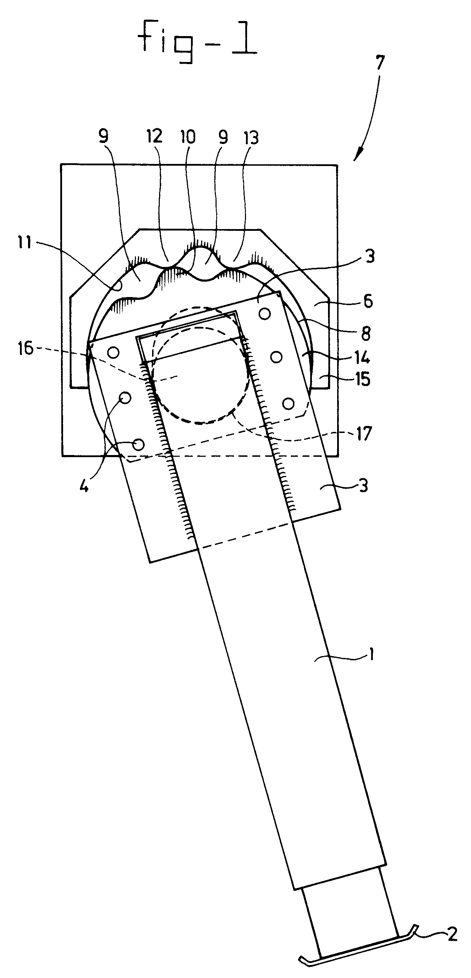

The embodiment shown in Figures 1 - 3 comprises a supporting leg 1 with a base plate 2, which is welded securely at its top end to a supporting plate 3. A ball-shaped joint part 5 is in turn fixed to this supporting plate 3 by means of bolts 4. This joint part 5 interacts with a socket-shaped joint part 6 which is fixed to the chassis 7 of a vehicle. The supporting leg is preferably a telescopic leg. It can be folded up through 90 degrees to its rest position, as a result of which the desired ground play can be ensured.

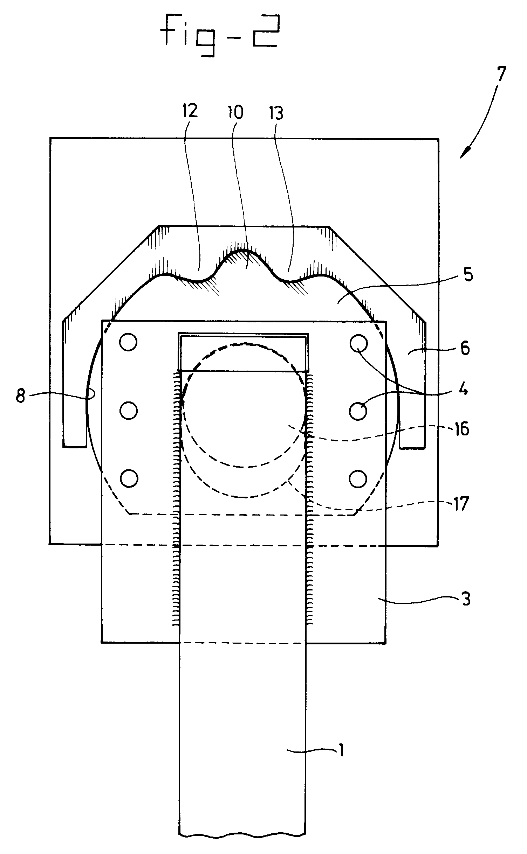

As can be seen in Figures 1 and 2, the ball-shaped joint part has an essentially cylindrical external surface 8 which is provided with two recesses 9. A projection 10 is determined between these two recesses 9, the top of which projection coincides with the imaginary continuation of the cylinder which determines the cylindrical shape of the ball-shaped joint part 5.

The socket-shaped joint part 6 also has an essentially cylindrical internal surface 11, relative to which the projections 12, 13 project. These projections 12, 13 in the working position of the supporting leg shown in Figure 2 engage in the recesses 9 of the ball-shaped joint part 5.

When the supporting leg 1 rests on the ground in the working position, and is thus under a compressive load, the surfaces 8, 11 of the two joint parts 5, 6 are held pressed firmly on each other. As a result of the interaction between the projections and the recesses, the supporting leg cannot turn, even if a certain horizontal load is exerted on the supporting leg. However, as soon as the horizontal load exceeds a predetermined value, which depends on the shape of the projections, the friction between the joint parts and the size of the pressure force in the supporting leg, the projections 12, 13 come out of the recesses 9, and the supporting leg can turn.

The chassis 7 is pushed up in the process. However, in this position both projections 12, 13 rest on the surface 8 of joint part 5. This support at two points is stable enough to support the vehicle initially, that is before the leg has been fully tilted away.

The load exerted horizontally on the base plate 2 has its reaction at the position of the parts 14, 15 of the joint parts. This horizontal load can thus be transmitted directly to the chassis 7, as can be seen in Figure 3. This means that the shaft 16 on which the two supporting legs 1 are mounted does not have to take this horizontal load.

It can also be seen in Figures 1 and 2 that shaft 16 is accommodated in slotted holes 17, which permit a limited movement of the shaft 16, and thus of the supporting legs 1, in the vertical direction.

It is pointed out that Figure 1 shows the neutral position. Before the supporting leg reaches this position, it is in a preferred position which gives a self-centring effect.

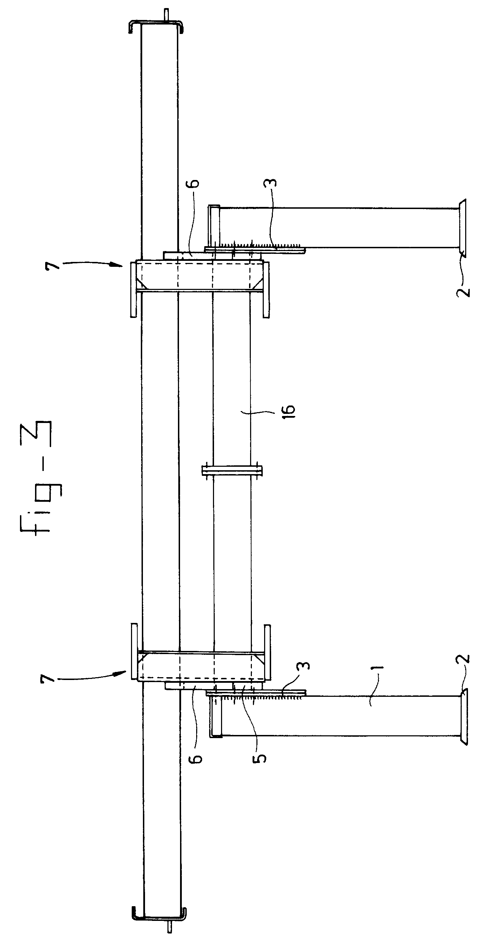

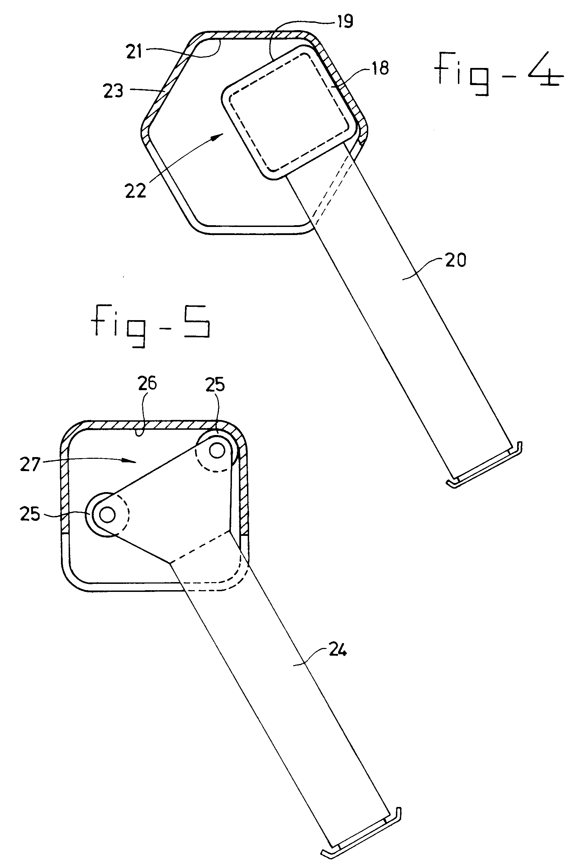

The embodiment shown in Figure 4 has a shaft 18 with a square cross-section and a flat top face 19. In the situation shown the shaft 18 with the leg 20 attached thereto is tilted. In the working situation, however, face 19 of the shaft lies against the likewise flat and horizontally running surface 21 of slotted hole 22. This slotted hole can be formed, for example, in a hexagonal fitting 23, which can be fixed in a manner not shown in any further detail to the chassis of the vehicle.

The embodiment shown in Figure 5 is provided with a supporting leg 24 which has at the top side two bearings situated at a distance from each other. These bearings are in the form of rollers 25 here. These rollers 25 can be supported on the face 26 of the fitting part 27, which is fixed in a manner not shown in any further detail to the chassis of the vehicle.

## Claims

1. Supporting device for a vehicle, comprising at least one supporting leg which is tiltable relative to the vehicle chassis between a working position in which it supports the chassis and a non-working position, characterised in that means are provided for stabilising the supporting leg to prevent it from turning out of the working position in which the supporting leg is supporting the chassis, which means prevent the supporting leg from turning when a couple which is smaller than a predetermined couple is exerted on it, and allow turning of the supporting leg when there is a couple which is greater than said predetermined couple, in such a way that overloading of the supporting leg and chassis is avoided.

2. Supporting device according to Claim 1, in which the chassis and the supporting leg have supporting surfaces which interact with each other when the supporting leg is in the working position, which supporting surfaces are formed and positioned in such a way that the supporting leg can turn out of the working position only if there is a simultaneous increase in the distance between the individual supporting surfaces of the supporting leg and those of the chassis, which increase in distance results in the chassis being raised relative to the ground on which the supporting leg is resting.

3. Supporting device according to Claim 2, in which the interacting supporting surfaces of the supporting leg and the chassis are essentially flat and run horizontally.

4. Supporting device according to Claim 2 or 3, in which the interacting supporting surfaces of the supporting leg and the chassis each comprise two supporting surface halves lying at a distance from each other in the lengthwise direction of the chassis.

5. Supporting device according to Claim 2, in which the supporting surfaces of supporting leg and chassis are formed by at least one ball-shaped joint part and a complementary socket-shaped joint part, and one of the joint parts comprises a projection which fits essentially in a close-fitting and self-centring manner into a correspondingly shaped recess in the other joint part when supporting surfaces of supporting leg and chassis are interacting, which projection and recess have flanks and walls respectively which are formed in such a way that when the supporting leg turns relative to the chassis the flanks of the projection can slide over the walls of the recess, in which case the projection moves out of the recess.

6. Supporting device according to Claim 5, in which each socket-shaped joint part comprises two projections lying essentially in the same plane, in such a way that when the supporting leg is turned at least two projections remain engaged with the ball-shaped joint part, with the result that two supporting points are retained for transmitting the loads exerted in the vertical direction on the supporting leg to the chassis.

7. Supporting device according to Claim 6, in which the socket-shaped joint part has an essentially cylindrical cavity relative to which the two projections are placed symmetrically and project inwards, and the ball-shaped joint part has an essentially cylindrical periphery provided with recesses corresponding to the projections.

8. Supporting device according to Claim 6 or 7, in which the essentially cylindrical part of the cavity of the socket-shaped joint part extends over at least an arc of 180 degrees, and the essentially cylindrical peripheral part of the ball-shaped joint part extends over an arc greater than 180 degrees, in such a way that both in the working and in the tilted position of the supporting leg at least one additional supporting point is retained for transmitting the load exerted in the horizontal direction on the supporting leg through the two joint parts to the chassis.

9. Supporting device according to one of Claims 5 to 8, in which each socket-shaped joint part is fixed to the chassis, and each ball-shaped joint part is fixed to a supporting leg.

10. Supporting device according to preceding Claim 6, 7, 8 or 9, in which the supporting leg is tiltable about a horizontal shaft running transversely relative to the chassis and provided with two vertical joint plates which run in the lengthwise direction of the chassis and each determine a ball-shaped joint part, and in which the chassis is provided with two correspondingly placed joint plates which each determine a socket-shaped joint part.

11. Supporting device according to Claim 10, in which two supporting legs are provided with a common shaft, which shaft has two joint plates each determining a ball-shaped joint part.

12. Supporting device according to Claim 10 or 11, in which the shaft is accommodated in each case in a slotted hole in at least two fittings fixed to the chassis.
